# EUROPÄISCHE PATENTSCHRIFT

(11) **EP 3 330 438 B1**
(45) Veröffentlichungstag und Bekanntmachung des Hinweises auf die Patenterteilung: **08.01.2020**
(21) Anmeldenummer: 17001911.1
(22) Anmeldetag: 23.11.2017
(51) Int. Cl.: E01C 19/48, B65G 23/44

(54) **STRASSENBAUMASCHINE UND VERFAHREN ZUM BETREIBEN EINER STRASSENBAUMASCHINE**
ROAD CONSTRUCTION MACHINE AND METHOD FOR OPERATING A ROAD CONSTRUCTION MACHINE
ENGIN DE CONSTRUCTION ROUTIÈRE ET PROCÉDÉ DE FONCTIONNEMENT D'UN ENGIN DE CONSTRUCTION ROUTIÈRE

(30) Priorität: 01.12.2016 DE 102016014395
(43) Veröffentlichungstag der Anmeldung: 06.06.2018
(73) Patentinhaber: Dynapac GmbH, 26203 Wardenburg (DE)
(72) Erfinder: Schwarting, Thorsten, 26203 Wardenburg (DE); Fasche, Christian, 27793 Wildeshausen (DE); Fischer, Stefan, 26215 Wiefelstede (DE)
(74) Vertreter: Möller, Friedrich

(56) Entgegenhaltungen:
- EP-A1- 2 377 787
- EP-A1- 3 124 407
- DE-U1- 20 311 436

## Beschreibung

Die Erfindung betrifft ein Verfahren zum Betreiben einer Straßenbaumaschine gemäß dem Oberbegriff des Anspruchs 1 sowie eine Straßenbaumaschine, insbesondere einen Straßenfertiger oder einen Beschicker, gemäß dem Oberbegriff des Anspruchs 8, siehe z.B. das Dokument EP3124407A1.

Straßenbaumaschinen, wie Straßenfertiger und Beschicker, dienen zur Herstellung von Straßenbelägen aus vorzugsweise Asphalt (Schwarzdecken), aber auch Beton. Solche üblicherweise selbstfahrenden Straßenbaumaschinen, verfügen in Fertigungsrichtung betrachtet an einem vorderen Ende einen Vorratsbehälter oder Bunker zum Aufnehmen des Straßenbaumaterials. Aus diesem Vorratsbehälter wird das Straßenbaumaterial über einen Förderer bzw. einen Kratzförderer oder Lattenrostketten unter einem Führerstand hindurch einem hinteren Ende der Straßenbaumaschine zugeführt. Während bei einem Straßenfertiger das Straßenbaumaterial einer Verteilerschnecke zugeführt wird, welches das Material gleichmäßig über die gesamte Breite einer Einbaubohle verteilt, wird bei einem Beschicker das Straßenbaumaterial von dem Kratzerförderer einem weiteren Förderer zugeführt. Dieser weitere Förderer versorgt einen in Fertigungsrichtung gesehen hinter dem Beschicker angeordneten Straßenfertiger mit Straßenbaumaterial.

Während bei Beschickern dem Vorratsbehälter zum Transport des Straßenbaumaterials zu dem weiteren Förderer nur ein Kratzerförderer zugeordnet ist, können dem Vorratsbehälter eines Straßenfertigers auch zwei Kratzerförderer zugeordnet sein. Diese beiden Kratzerförderer sind parallel zueinander angeordnet und versorgen jeweils eine Hälfte der Verteilerschnecke mit Straßenbaumaterial. Je nach Anwendung des Straßenfertigers können die beiden Kratzerbänder unabhängig voneinander betrieben werden, um den verschiedenen Seiten der Verteilerschnecke bzw. der Einbaubohle verschiedene Mengen an Straßenbaumaterial zukommen zu lassen.

Die Kratzerförderer bestehen im Wesentlichen aus zwei parallelen Zugmitteln bzw. Fördersträngen, die als Förderketten ausgebildet sind. Zwischen diesen beiden parallelen Ketten eines Kratzerförderers sind Führungen bzw. Mitnehmer, Querstege oder Förderstege ausgebildet. Diese Förderketten mit den Förderstäben sind um ein Tragmittel rotierend angeordnet. Die Tragmittel sind zumindest auf einer Oberseite als Bleche ausgebildet. Während ein vorderes Ende des Tragmittels dem Vorratsbehälter zugewandt ist, ist ein hinteres Ende der Verteilerschnecke zugewandt. Das Tragmittel ist dabei horizontal oder nahezu horizontal ausgerichtet. Während an dem vorderen Ende des Tragmittels eine Rolle, insbesondere eine glatte Rolle für die Umlenkung der beiden Förderketten vorgesehen ist, befinden sich an dem hinteren Ende des Tragmittels Kettenräder zur angetriebenen Umlenkung der Förderketten. Während jeweils die Förderkettenabschnitte, die auf der Oberseite des Tragmittels als Lasttrum oder Obertrum bezeichnet werden, bezeichnet man die Abschnitte der Förderketten die der Unterseite des Tragmittels zugewandt sind als Leertrum oder Untertrum.

Zum Transport des Straßenbaumaterials aus dem Vorratsbehälter zu der Verteilerschnecke werden die Förderketten des Kratzerförderers entgegen der Fertigungsrichtung angetrieben, wodurch das Lasttrum gespannt und durch die Förderstege Straßenbaumaterial vor die Verteilerschnecke transportiert wird. Das Leertrum wird sodann unter einer geringen mechanischen Spannung, d. h. durchhängend, von dem hinteren Ende zurück zu dem vorderen Ende des Kratzerförderers bewegt. Damit der Kettendurchhang des Untertrums nicht zu stark ist, kann jeder Kettenstrang mit einem Kettengleitschuh gestützt werden.

Um den Kettendurchhang der Kettenstränge zu minimieren, erfolgt an den Rollen am vorderen Ende des Kratzerförderers ein Spannen mit einer Spanneinrichtung. Dieses statische Spannen der Umlenkrollen erfolgt durch eine manuelle Verschiebung in Fertigungsrichtung durch Drehen einer Gewindestange oder durch die Betätigung eines Zylinders bzw. durch eine Fettfüllung eines Zylinders.

Da die Kratzerförderer einer starken mechanischen Belastung ausgesetzt sind, müssen sie häufig bzgl. Verschleiß kontrolliert werden. Auch der Kettendurchhang muss ständig geprüft werden und ggf. korrigiert werden. Durch die manuelle Einstellung des Kettendurchhanges kommt es jedoch oftmals zu einer Falscheinstellung, d. h. die Kettenstränge werden zu stramm oder zu lose oder nicht gleichmäßig eingestellt. Die Kontrolle von Verschleißerscheinungen sowohl an den Förderketten als auch an den Tragmitteln bzw. den Blechen ist nur im ausgebauten Zustand der Förderketten möglich. Wenn die Förderketten nicht ordnungsgemäß gespannt sind, kann es zu einer Fehlfunktion der Kettenräder kommen, wodurch die Förderketten zu weit hochgezogen werden. Eine weitere Konsequenz einer nicht ordnungsgemäß gespannten Förderkette ist, dass beim Reversieren der untere Trum gespannt und der obere Trum zu lose wird, was zu einer Aufstauung des Obertrums führen kann. Eine derartige Aufstauung hat eine besonders ineffiziente und fehlerhafte Förderung des Mischgutes zur Konsequenz.

Der Erfindung liegt die Aufgabe zugrunde eine Straßenbaumaschine sowie ein Verfahren zum Betreiben einer Straßenbaumaschine zu schaffen, mit dem ein einfacher und zuverlässiger Betrieb der Straßenbaumaschine möglich ist.

Ein Verfahren zur Lösung dieser Aufgabe weist die Maßnahmen des Anspruchs 1 auf. Durch diese automatische Spannung der Förderketten kann es vermieden werden, dass falsche Einstellungen der Kettenspannung oder des Kettendurchhanges vorgenommen werden. Dadurch wird eine Überlastung oder gar Beschädigung der Ketten unterbunden. Durch diesen schonenden Betrieb des Kratzerförderers kann eine längere Standzeit erzielt werden. Eine händische Einstellung der Kettenspannungen wird somit überflüssig, wodurch der gesamte Betrieb sicherer und schneller wird.

Insbesondere kann es die vorliegende Erfindung weiter vorsehen, dass der Kettendurchhang des unteren Trums durch einen Sensor ermittelt wird und dem ermittelten Durchhang entsprechend die Förderketten des Kratzerförderers automatisch gespannt werden. Durch diese Bestimmung des Kettendurchhanges mittels eines Sensors werden die Förderketten genau in dem Maße gespannt, die es für eine besonders schonende und effektive Betriebsweise des Kratzerförderers bedarf. Je nach Förderrichtung und Fördermengen bzw. Material das gefördert wird, kann eine individuelle Spannkraft ermittelt und eingestellt werden. Der Sensor kann dabei mechanisch, elektromagnetisch oder optisch ausgestaltet sein.

Bevorzugt kann es die vorliegende Erfindung weiter vorsehen, dass eine Verschleißgrenze der Förderketten des Kratzerförderers und/oder ein Verschleiß der Tragmittel, insbesondere der Bleche, des Kratzerförderers jeweils durch mindestens einen Sensor oder einen Verschleiß-Indikator erfasst und/oder angezeigt werden. Das Anzeigen des Verschleißes der Ketten und der Bleche ermöglichst es, vor einem Schaden und dem damit verbundenen Betriebsausfall, das entsprechende Verschleißteil auszutauschen. Dadurch können insbesondere die Wartungsarbeiten reduziert werden, indem der Kratzerförderer nur bei Bedarf gewartet wird. Wenn festgestellt wird, dass eine bestimmte Betriebsart zu einem erhöhten Verschleiß führt, kann der Betrieb des Kratzerförderers entsprechend angepasst werden, um den Verschleiß zu reduzieren. Dadurch kann eine Überlastung oder Beschädigung der Ketten oder anderer Bauteile vermieden werden. Diese Anzeige des Verschleißes ist insbesondere sehr komfortabel für die Bedienperson. Bisher mussten Verschleißteile an dem Kratzerförderer manuell begutachtet werden, was sich als besonders schwierig darstellt, da der Kratzerförderer in die Straßenbaumaschine integriert ist. Durch die vorliegende Erfindung ist es möglich, sämtliche Verschleißerscheinungen automatisch zu ermitteln und anhand des Ergebnisses entsprechende Maßnahmen vorzunehmen.

Ein weiteres vorteilhaftes Ausführungsbeispiel der vorliegenden Erfindung kann es vorsehen, dass zum Spannen des Kratzerförderers Rollen zur Umlenkung der Förderketten, die den in Fertigungsrichtung betrachtet, vorderen Ende des Kratzerförderers zugeordnet sind, und/oder angetriebene Kettenräder zur angetriebenen Umlenkung den Förderketten, die den in Fertigungsrichtung betrachtet hinteren Ende des Kratzerförderers zugeordnet sind, in Fertigungsrichtung automatisch, insbesondere in Abhängigkeit vom ermittelten Kettendurchhang, verschoben werden. Dadurch wird es möglich, dass der Kettendurchhang lastabhängig für jede Förderkette, insbesondere bei mehreren Kratzerförderern individuell für jede Förderkette, einstellbar ist. Beispielsweise wird dadurch ermöglicht, Kratzerförderer, die verschiedene Seiten einer Verteilerschnecke mit dem Straßenbaumaterial versorgen, unterschiedlich einzustellen. Dies erscheint insbesondere als sinnvoll für Situationen, bei denen die beiden Seiten der Verteilerschnecke mit unterschiedlich viel Straßenbaumaterial beaufschlagt werden. Weiter kann es erfindungsgemäß vorgesehen sein, dass mehrere dem Vorratsbehälter zugeordnete Kratzerförderer, insbesondere deren Obertrums und/oder Untertrums, unabhängig voneinander, vorzugsweise unterschiedlich stark, durch jeweils eine Spanneinrichtung gespannt werden. Dazu sind jedem Kratzerförderer zur Ermittlung des Durchhanges entsprechende Sensoren zugeordnet. Eine der Straßenbaumaschine zugeordnete Steuereinrichtung ermittelt sodann in Abhängigkeit von der Betriebsart die notwendige Spannung der Kettenstränge und steuert entsprechende Spanneinrichtungen zur Spannung der Ketten an. Gleichzeitig wird die vorgenommene Spannung der Ketten durch die Sensoren geprüft und eventuelle Nachregelungen vorgenommen.

Vorzugsweise ist es erfindungsgemäß weiter denkbar, dass das Obertrum (31) und das Untertrum (32) gleichmäßig durch die mindestens eine Spanneinrichtung dauerhaft, vorzugsweise nur beim Reversieren des Kratzerförderers, gespannt werden. So erscheint es beispielsweise als notwendig, dass beim Normalbetrieb des Kratzerförderers das Lasttrum durchgängig gespannt ist, wobei das Leertrum nur geringfügig gespannt werden muss. Anderseits ist beim Reversieren des Kratzerförderers das Leertrum zu spannen und das Lasttrum ebenfalls mit einer gewissen Spannung zu betreiben. Für bestimmte Anwendungen kann es vorteilhaft sein, das zu jedem Zeitpunkt sowohl das Lasttrum als auch das Leertrum gespannt sind.

Insbesondere kann es die vorliegende Erfindung außerdem vorsehen, dass der mindestens eine Kratzerförderer zusätzlich zu der Spanneinrichtung von weiteren federnden, insbesondere mechanischen oder hydraulischen, Federelementen gespannt wird. Diese zusätzlichen Federelemente ermöglichen es, die Förderketten flexibel und auf die Situation optimiert zu betreiben.

Eine Straßenbaumaschine zur Lösung der genannten Aufgabe weist die Merkmale des Anspruchs 8 auf. Diese Spanneinrichtung dient dazu die Förderketten des Kratzerförderers automatisch, d. h. ohne Zutun einer Bedienperson, den Anforderungen entsprechend zu spannen. Dadurch kann sowohl ein verschleißarmer als auch ein sicherer Betrieb der Straßenbaumaschine erzielt werden.

Bevorzugt kann es die vorliegende Erfindung weiter vorsehen, dass einem unteren Trum des Kratzerförderers mindestens ein elektrischer, elektromagnetischer, optischer oder mechanischer, Sensor zugeordnet ist, zur Erfassung des Kettendurchhangs. Bei diesem Sensor kann es sich um einen mechanischen, einen elektrischen, einen elektromagnetischen oder einen optischen Sensor handeln, der an der Unterseite des Tragmittels positioniert ist. Dabei ist es vorgesehen, dass jeder Förderkette ein Sensor zugewiesen ist. Es ist jedoch gleichermaßen auch denkbar, dass ein Sensor zwei bzw. mehrere Ketten überwacht.

Ein weiteres Ausführungsbeispiel sieht es vor, dass den Förderketten des Kratzerförderers mindestens ein elektrischer, elektromagnetische, optischer oder mechanischer, Sensor zugeordnet ist, zum Erfassen und Anzeigen einer Verschleißgrenze. Diese Verschleißgrenze kann durch die Bedienperson individuell und nutzungsabhängig eingestellt werden. Durch das Erfassen und das Anzeigen wird die Bedienperson rechtzeitig auf einen möglichen Verschleiß hingewiesen. Gleichermaßen lässt sich eine Betriebsart bei einem nachgewiesenen besonders hohem Verschleiß entsprechend anpassen, um den Verschleiß zu reduzieren.

Außerdem kann es erfindungsgemäß vorgesehen sein, dass dem Tragmittel, insbesondere den Blechen, des Kratzerförderers mindestens ein, insbesondere elektrischer, elektromagnetische, optischer oder mechanischer, Verschleiß-Indikator zugeordnet ist, zum Erfassen und/oder Anzeigen eines Verschleißes. Bei diesem Verschleiß-Indikator kann es sich beispielsweise um eine Senkbohrung auf der Innenseite der Bleche handeln. Sobald aus dieser Senkbohrung eine durchgehende Bohrung aufgrund des Verschleißes geworden ist, bedarf es eines Austausches des Bleches. Dieser Verschleiß-Indikator kann sowohl durch einen optischen Sensor als auch augenscheinlich durch eine Bedienperson ausgewertet werden. Gleichermaßen kann es vorgesehen sein, dass die Materialdicke des Bleches über einen elektrischen Widerstand kontrollierbar ist.

Bevorzugt kann es weiter vorgesehen sein, dass dem in Fertigungsrichtung betrachtet hinteren Ende des Kratzerförderers Kettenräder zur angetriebenen Umlenkung der Förderketten und dem in Fertigungsrichtung betrachtet vorderen Ende des Kratzerförderers Rollen zur Umlenkung der Förderketten zugeordnet sind. Dem vorderen Ende und/oder dem hinteren Ende des Kratzerförderers ist die Spanneinrichtung zugeordnet. Zusätzlich kann es vorgesehen sein und, dass den Enden außerdem mechanische oder hydraulische Federelemente zugeordnet sind. Durch dieses Zusammenwirken der Spanneinrichtung und der Federelement können die Förderketten je nach Situation optimal gespannt werden. Die mechanischen bzw. hydraulischen Federelemente können ansteuerbar sein, sodass sie durch die Steuereinheit dem nachgewiesenen Kettendurchhang entsprechend einstellbar sind.

Bevorzugt kann es außerdem vorgesehen sein, dass dem Vorratsbehälter mehrere Kratzerförderer zugeordnet sind, die jeweils Sensoren zum Erfassen eines Kettendurchhanges und/oder eines Verschleißes aufweisen, wobei die Kratzerförderer unabhängig voneinander durch jeweils eine Spanneinrichtung spannbar sind. Jeder dieser Sensoren und jeder der Kratzerförderer wird durch eine zentrale Steuereinheit der Straßenbaumaschine angesteuert. Die Steuerung der Spanneinrichtungen wird für Dokumentationszwecke, insbesondere bzgl. des Verschleißes, gespeichert und ausgewertet.

Ein bevorzugtes Ausführungsbeispiel wird nachfolgend anhand der Zeichnung näher erläutert. In dieser zeigen:
- Fig. 1: eine schematische Seitenansicht eines Straßenfertigers,
- Fig. 2: eine perspektivische Ansicht eines Kratzerförderers,
- Fig. 3: eine Seitenansicht des in Fig. 2 dargestellten Kratzerförderers,
- Fig. 4: eine weitere perspektivische Ansicht des Kratzerförderers, und
- Fig. 5: eine perspektivische Ansicht einer Unterseite des Kratzerförderers.

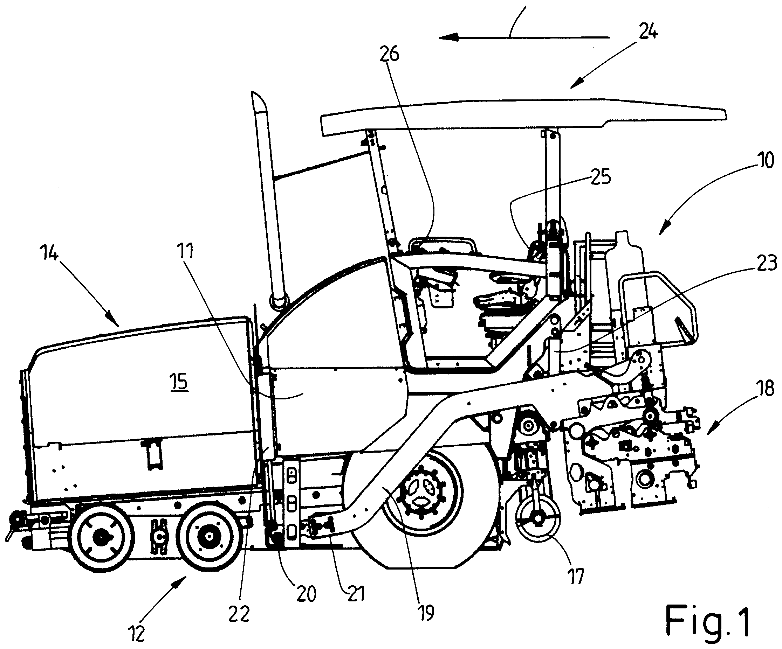

Ein in Fig. 1 schematisch dargestellter Straßenfertiger 10 ist selbstfahrend ausgebildet. Dazu verfügt er über eine zentrale Antriebseinheit 11, die beispielsweise einen Verbrennungsmotor aufweist, der beispielsweise Hydraulikpumpen zur Versorgung von Hydraulikmotoren und ggf. einen Generator zur Erzeugung von Energie für elektrische Antriebe antreibt.

Der Straßenfertiger 10 weist ein Fahrwerk 12 auf, das im gezeigten Ausführungsbeispiel der Fig. 1 als Radfahrwerk ausgebildet ist, aber auch als Raupenfahrwerk oder als ein anderes Fahr- bzw. Lauffahrwerk ausgebildet sein kann.

In Fertigungsrichtung 13 betrachtet, ist vor der Antriebseinheit 11 ein wannen- bzw. muldenartig ausgebildeter Vorratsbehälter 14 angeordnet. Dieser Vorratsbehälter 14 nimmt einen Vorrat des zur Herstellung des Straßenbelags dienenden Straßenbaumaterials, beispielsweise Asphalt auf. Ggf. können auch mehrere Vorratsbehälter 14 vorgesehen sein. Der Vorratsbehälter 14 weist zwei Klappen 15 auf, die gegenüberliegend angeordnet und parallel zur Fertigungsrichtung 13 hochklappbar sind. Während der Herstellung des Straßenbelags befinden sich die beiden Klappen 15 in einer hochgeklappten Position, sodass sie einen Winkel einschließen, dessen Scheitelpunkt mit einer Mittelachse des Straßenfertigers 10 zusammenfallen, wobei dieser Scheitelpunktbereich geöffnet ist, damit das Straßenbaumaterial auf ein, unter den Klappen 15, führendes Förderband rutschen kann. Bei diesem Förderband handelt es sich um einen Kratzerförderer 16. Für die Befüllung des Vorratsbehälters 14 werden die beiden Klappen 15 in eine waagerechte Position verschwenkt, sodass eine Aufnahmebreite des Vorratsbehälters 14 maximiert ist.

Durch einen in der Fig. 1 nicht dargestellten Kratzerförderer 16 wird das Straßenbaumaterial vom Vorratsbehälter 14 unter der Antriebseinheit 11 hindurch zu einem, in Fertigungsrichtung 13 betrachtet, hinteren Teil des Straßenfertigers 10 transportiert. Von einer hinter dem Fahrwerk 12 angeordneten Verteilerschnecke 17 wird das Straßenbaumaterial über die gesamte Arbeitsbreite des Straßenfertigers 10 verteilt. Dabei gelangt ein Vorrat des Straßenbaumaterials vor eine, hinter der Verteilerschnecke 17 und dem Fahrwerk 12 angehängte, auf- und abbewegbare, Einbaubohle 18. Durch die Einbaubohle 18 wird eine Schicht des Straßenbelags mit einer vorbestimmten Dicke hergestellt.

Die Einbaubohle 18 ist schwenkbar an zwei parallel zur Fertigungsrichtung 13 ausgerichteten holmenartigen Tragarmen 19 angeordnet. Die Tragarme 19 sind dem Straßenfertiger schwenkbar zugeordnet. An einem Zugpunkt 20 am vorderen Ende 21 der Tragarme 19 ist jeweils ein Nivellierzylinder 22 angeordnet. Diese Nivellierzylinder 22 sind dem Straßenfertiger 10 fest zugeordnet, und zwar vorzugsweise in Fertigungsrichtung 13 betrachtet, hinter dem Vorratsbehälter 14. Des Weiteren sind den Tragarmen 19 in Einbaurichtung gesehen vor der Einbaubohle 18 jeweils ein Hubzylinder 23 bzw. ein Bohlenhubzylinder zugeordnet. Diese Hubzylinder 23 dienen im Wesentlichen dazu, die Einbaubohle 18 für den Straßentransport des Straßenfertigers 10 hochzuschwenken. Während des Herstellungsprozesses ist die Einbaubohle 18 ab gesenkt und die Hubzylinder 23 befinden sich vorzugsweise in einer Schwimmstellung.

Der Straßenfertiger 10 wird von einer nicht dargestellten Bedienperson von einem Bedienstand 24 aus gesteuert. Dieser Bedienstand 24 kann als geschlossene oder offene Kabine ausgebildet sein und befindet sich über dem Fahrwerk 12. Dabei weist der Bedienstand 24 einen Fahrersitz 25 und einen Bedienpult 26 auf. Es ist jedoch auch denkbar, dass der Straßenfertiger 10 ferngesteuert betreibbar ist und keine Person für den Betrieb des Straßenfertigers 10 in dem Bedienstand 24 notwendig ist.

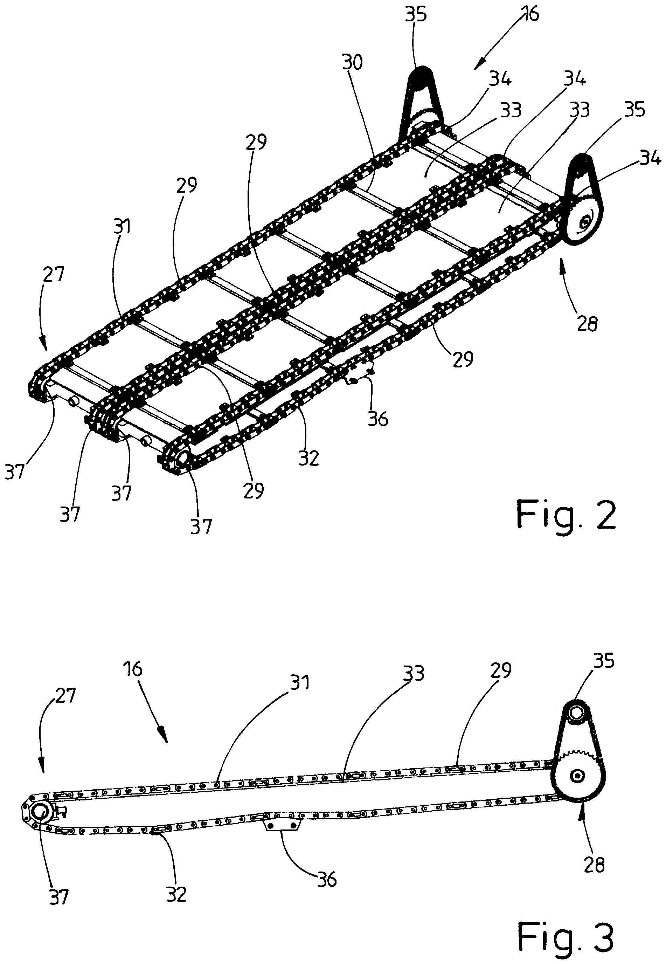

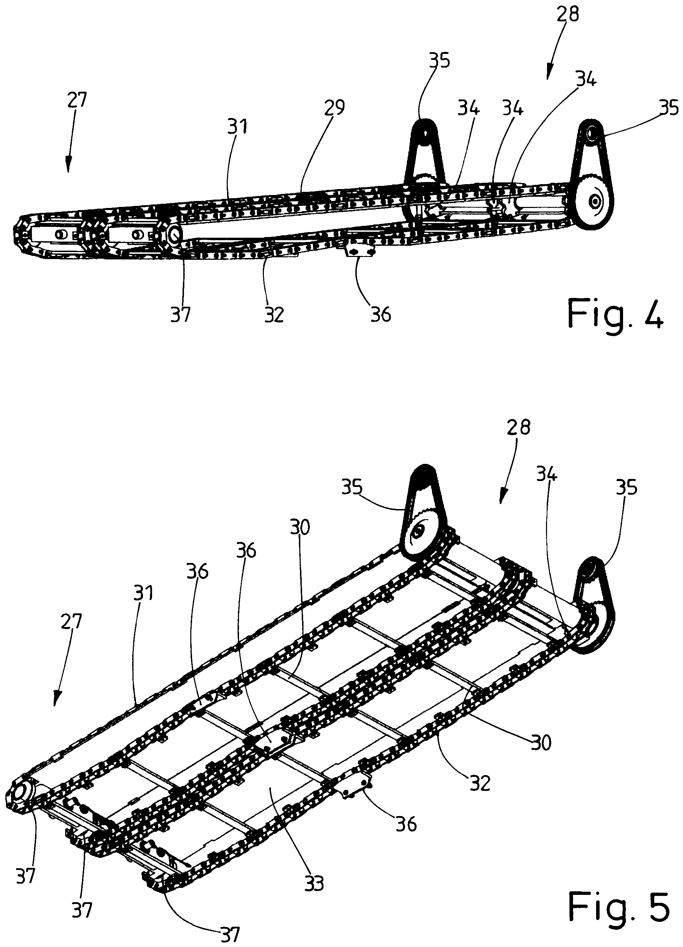

Der in der Fig. 2 dargestellte Kratzerförderer 16 ist mit einem vorderen Ende 27 dem Vorratsbehälter 14 und mit einem hinteren Ende 28 der Verteilerschnecke zugeordnet, wobei der Kratzerförderer 16 fest mit der Straßenbaumaschine bzw. am Fahrgestell 12 verbunden ist. Der Kratzerförderer 16 wird während des Betriebs der Straßenbaumaschine von der Antriebseinheit 11 mit Energie versorgt. Zum Transport des Förderguts bzw. des Straßenbaumaterials vom Vorratsbehälter 14 zu der Verteilerschnecke 17 weist der Kratzerförderer 16 zwei Paare Zugmittel bzw. Förderstränge bzw. Förderketten 29 auf. Zwischen diesen Paaren paralleler Förderketten 29 sind Führungen bzw. Mitnehmer bzw. Querstege bzw. Förderstege 30 positioniert. Die Förderketten 29 bilden mit dem Fördersteg 30 auf einer Oberseite des Kratzerförderers 16 ein Lasttrum bzw. Obertrum 31 und auf der gegenüberliegenden Seite des Kratzerförderers 16 ein Leertrum bzw. Untertrum 32 (Fig. 3, 4).

Zur Förderung des Straßenbaumaterials von dem vorderen Ende 27 zum hinteren Ende 28 des Kratzerförderers 16 wird das Material von dem Obertrum 31 bzw. von den Förderstegen 30 auf den als Bleche 33 ausgebildeten Tragmittel befördert. Für diese Förderung werden die Förderketten 29 an einem vorderen Ende 27 des Kratzerförderers 16 am vorderen Ende 27 um Rollen 37 gelenkt. An dem gegenüberliegenden hinteren Ende 28 wird der Kratzerförderer 16 bzw. die Förderketten 29 durch angetriebene Kettenräder 34 in Bewegung gesetzt. Die Kettenräder 34 werden über zwei hier nur angedeutete Antriebe 35 angetrieben.

Den Förderketten 29 des Untertrums 32 sind jeweils Kettengleitschuhe 36 zugeordnet, um einen übermäßigen Durchhang der Förderketten 29 zu verhindern (Fig. 5). Um den Transport des Straßenbaumaterials von dem Vorratsbehälter 14 zu der Verteilerschnecke 17 möglichst effektiv zu gestalten, ist es wichtig, dass die Förderketten 29 des Obertrums 31 gespannt sind. Gleichermaßen ist ein Durchhang der Förderketten 29 des Untertrums 32 gering zu halten. Erfindungsgemäß ist dem Kratzerförderer 16 mindestens ein nicht dargestellter Sensor bzw. jeder Förderkette 29 mindestens ein Sensor zugeordnet zur Bestimmung des Kettendurchhangs. Wenn der durch den mindestens einen Sensor ermittelte Kettendurchhang der Förderketten 29 einen zuvor bestimmten Schwellenwert überschreitet, können die Förderketten 29 erfindungsgemäß durch eine nicht dargestellte Spanneinrichtung derart gespannt werden, dass der Durchhang der Förderketten 29 reduziert wird. Zum Spannen der Förderketten 29 werden die Rollen 37 bzw. die Kettenräder 34 in bzw. entgegen der Fertigungsrichtung 13 verschoben. Zusätzlich zu der Spanneinrichtung können dem Kratzerförderer noch mechanische bzw. hydraulische nicht dargestellte Federelemente zugeordnet sein, welche die Förderketten 29 vorspannen.

Dem Straßenfertiger 10 ist eine nicht dargestellte Steuereinrichtung zugeordnet, die sowohl den mindestens einen Sensor zur Bestimmung des Durchhanges der Förderketten 29 steuert, als auch die Verschiebung der Rollen 37 bzw. der Kettenräder 34 bestimmt, um den Durchhang der Förderketten 29 zu reduzieren. Durch diese Steuereinrichtung ist es somit möglich, die Förderketten 29 abhängig von dem Betrieb des Straßenfertigers 10 optimal zu spannen.

Wie in den Fig. 2 bis 5 dargestellt, ist es durchaus denkbar, dass der Kratzerförderer 16 zwei parallel nebeneinanderlaufende Paare Förderketten 29 mit jeweils Förderstegen 30 aufweist, um die verschiedenen Seiten der Verteilerschnecke 17 mit unterschiedlichen Mengen an Straßenbaumaterialien zu versorgen.

An dieser Stelle sei ausdrücklich darauf hingewiesen, dass die vorliegende Erfindung nicht eingeschränkt ist auf einen Straßenfertiger, sondern vielmehr auch in einem Beschicker zum Transport des Straßenbaumaterials von einem Vorratsbehälter zu einem weiteren Förderer verwendet werden kann.

**Bezugszeichenliste:**

| | | | |
|---|---|---|---|
| 10 | Straßenfertiger | 36 | Kettengleitschuh |
| 11 | Antriebseinheit | 37 | Rolle |
| 12 | Fahrwerk | | |
| 13 | Fertigungsrichtung | | |
| 14 | Vorratsbehälter | | |
| 15 | Klappe | | |
| 16 | Kratzerförderer | | |
| 17 | Verteilerschnecke | | |
| 18 | Einbaubohle | | |
| 19 | Tragarm | | |
| 20 | Zugpunkt | | |
| 21 | vorderes Ende | | |
| 22 | Nivellierzylinder | | |
| 23 | Hubzylinder | | |
| 24 | Bedienstand | | |
| 25 | Fahrersitz | | |
| 26 | Bedienpult | | |
| 27 | vorderes Ende | | |
| 28 | hinteres Ende | | |
| 29 | Förderkette | | |
| 30 | Fördersteg | | |
| 31 | Obertrum | | |
| 32 | Untertrum | | |
| 33 | Blech | | |
| 34 | Kettenrad | | |
| 35 | Antrieb | | |

## Patentansprüche

1. Verfahren zum Betreiben einer Straßenbaumaschine, insbesondere eines Straßenfertigers (10) oder eines Beschickers, wobei durch mindestens einen Kratzerförderer (16) Straßenbaumaterial von einem in Fertigungsrichtung (13) betrachtet am vorderen Ende der Straßenbaumaschine angeordneten Vorratsbehälter (14) zur Aufnahme von Straßenbaumaterial zu einem hinteren Ende der Straßenbaumaschine transportiert wird, **dadurch gekennzeichnet, dass** ein Kettendurchhang der Förderketten (29) des Kratzerförderers (16) durch mindestens einen Sensor ermittelt wird und dem ermittelten Kettendurchhang entsprechend die Förderketten (29) des Kratzerförderers (16) automatisch durch eine Spanneinrichtung gespannt werden, wobei die Förderketten (29) von einer Steuereinrichtung in Abhängigkeit von einem Betrieb des Straßenfertigers (10) oder des Beschickers gespannt werden und eine Verschleißgrenze der Förderketten (29) des Kratzerförderers (16) jeweils durch mindestens einen Sensor erfasst werden.

2. Verfahren nach Anspruch 1, **dadurch gekennzeichnet, dass** ein Kettendurchhang des unteren Trums (32) des Kratzerförderers (16) durch mindestens einen Sensor ermittelt wird und dem ermittelten Kettendurchhang entsprechend die Förderketten (29) des Kratzerförderers (16) automatisch gespannt werden.

3. Verfahren nach Anspruch 1 oder 2, **dadurch gekennzeichnet, dass** eine Verschleißgrenze der Förderketten (29) des Kratzerförderers (16) und/oder ein Verschleiß der Tragmittel, insbesondere von Blechen (33), des Kratzerförderers (16) jeweils durch mindestens einen Sensor oder einen Verschleiß-Indikator erfasst und/oder angezeigt werden.

4. Verfahren nach einem der vorhergehenden Ansprüche, **dadurch gekennzeichnet, dass** zum Spannen des Kratzerförderers (16) Rollen (37) zur Umlenkung der Förderketten (29), die dem in Fertigungsrichtung (13) betrachtet vorderem Ende (27) des Kratzerförderers (16) zugeordnet sind, und/oder angetriebene Kettenräder (34) zur angetriebenen Umlenkung den Förderketten (29), die dem in Fertigungsrichtung (13) betrachtet hinterem Ende (28) des Kratzerförderers (16) zugeordnet sind, in und/oder entgegen der Fertigungsrichtung (13) automatisch, insbesondere in Abhängigkeit vom ermittelten Kettendurchhang, verschoben werden.

5. Verfahren nach einem der vorhergehenden Ansprüche, **dadurch gekennzeichnet, dass** mehrere dem Vorratsbehälter (14) zugeordnete Kratzerförderer (16), insbesondere deren Obertrums (31) und/oder Untertrums (32), unabhängig voneinander, vorzugsweise unterschiedlich stark, durch jeweils eine Spanneinrichtung gespannt werden.

6. Verfahren nach Anspruch 5, **dadurch gekennzeichnet, dass** das Obertrum (31) und das Untertrum (32) gleichmäßig durch die mindestens eine Spanneinrichtung dauerhaft, vorzugsweise nur beim Reversieren des Kratzerförderers (16), gespannt werden.

7. Verfahren nach einem der vorhergehenden Ansprüche, **dadurch gekennzeichnet, dass** der mindestens eine Kratzerförderer (16) zusätzlich zu der Spanneinrichtung von weiteren federnden, insbesondere mechanischen oder hydraulischen, Federelementen gespannt wird.

8. Straßenbaumaschine, insbesondere Straßenfertiger (10) oder Beschicker, mit einem am in Fertigungsrichtung (13) betrachtet vorderen Ende der Straßenbaumaschine angeordneten Vorratsbehälter (14) zur Aufnahme von Straßenbaumaterial und mit mindestens einem Kratzerförderer (16) zum Fördern des Straßenbaumaterials vom Vorratsbehälter (14) zu einem hinteren Ende der Straßenbaumaschine, **dadurch gekennzeichnet, dass** einem unteren Trum (32) des Kratzerförderers (16) mindestens ein Sensor zugeordnet ist zur Erfassung eines Kettendurchhangs und der mindestens eine Kratzerförderer (16) eine Spanneinrichtung zum automatischen Spannen der Förderketten (29) aufweist sowie eine Steuereinrichtung durch welche die Förderketten (29) in Abhängigkeit von einem Betrieb des Straßenfertigers (10) oder des Beschickers spannbar sind und den Förderketten (29) des Kratzerförderers (16) mindestens ein Sensor zugeordnet ist zum Erfassen und Anzeigen einer Verschleißgrenze.

9. Straßenbaumaschine nach Anspruch 8, **dadurch gekennzeichnet, dass** einem unterem Trum (32) des Kratzerförderers (16) mindestens ein elektrischer, elektromagnetischer, optischer oder mechanischer, Sensor zugeordnet ist zur Erfassung des Kettendurchhangs.

10. Straßenbaumaschine nach einem der Ansprüche 8 oder 9, **dadurch gekennzeichnet, dass** den Förderketten (29) des Kratzerförderers (16) mindestens ein elektrischer, elektromagnetischer, optischer oder mechanischer Sensor zugeordnet ist, zum Erfassen und Anzeigen einer Verschleißgrenze.

11. Straßenbaumaschine nach einem der Ansprüche 8 bis 10, **dadurch gekennzeichnet, dass** den Tragmitteln, insbesondere Blechen (33), des Kratzerförderers (16) mindestens ein, insbesondere elektrischer, elektromagnetischer, optischer oder mechanischer, Verschleiß-Indikator zugeordnet ist, zum Erfassen und/oder Anzeigen eines Verschleißes.

12. Straßenbaumaschine nach einem der Ansprüche 8 bis 11, **dadurch gekennzeichnet, dass** dem in Fertigungsrichtung (13) betrachtet hinterem Ende (28) des Kratzerförderers (16) Kettenräder (34) zur angetriebenen Umlenkung der Förderketten (29) und dem in Fertigungsrichtung (13) betrachtet vorderem Ende (27) des Kratzerförderers (16) Rollen (37) zur Umlenkung der Förderketten (29) zugeordnet sind, wobei dem vorderen Ende (27) und/oder dem hinteren Ende (28) des Kratzerförderers (16) die Spanneinrichtung und vorzugsweise mechanische oder hydraulische Federelemente, zugeordnet sind.

13. Straßenbaumaschine nach einem der Ansprüche 8 bis 12, **dadurch gekennzeichnet, dass** dem Vorratsbehälter (14) mehrere Kratzerförderer (16) zugeordnet sind, die jeweils Sensoren zum Erfassen eines Kettendurchhangs und/oder eines Verschleißes aufweisen, wobei die Kratzerförderer (16) unabhängig voneinander durch jeweils eine Spanneinrichtung spannbar sind.

## Claims

1. Method for operating a road-building machine, in particular a road paver (10) or a loader, wherein at least one scraper conveyor (16) is used to transport road-building material from a supply container (14), which, as viewed in the paving direction (13), is arranged at the front end of the road-building machine and intended for receiving road-building material, to a rear end of the road-building machine, **characterized in that** a chain sag of the conveyor chains (29) of the scraper conveyor (16) is determined by at least one sensor and, on the basis of the determined chain sag, the conveyor chains (29) of the scraper conveyor (16) are automatically tensioned by a tensioning device, wherein the conveyor chains (29) are tensioned by a control device in dependence on an operation of the road paver (10) or of the loader, and a wear limit of the conveyor chains (29) of the scraper conveyor (16) are in each case detected by at least one sensor.

2. Method according to Claim 1, **characterized in that** a chain sag of the lower strand (32) of the scraper conveyor (16) is determined by at least one sensor and, on the basis of the determined chain sag, the conveyor chains (29) of the scraper conveyor (16) are automatically tensioned.

3. Method according to Claim 1 or 2, **characterized in that** a wear limit of the conveyor chains (29) of the scraper conveyor (16) and/or a wear of the supporting means, in particular of plates (33), of the scraper conveyor (16) are in each case detected and/or indicated by at least one sensor or a wear indicator.

4. Method according to one of the preceding claims, **characterized in that**, for the purpose of tensioning the scraper conveyor (16), rollers (37) for deflecting the conveyor chains (29), which rollers are assigned to the front end (27) of the scraper conveyor (16) as viewed in the paving direction (13), and/or driven chain wheels (34) for the driven deflection of the conveyor chains (29), which chain wheels are assigned to the rear end (28) of the scraper conveyor (16) as viewed in the paving direction (13), are automatically displaced in and/or counter to the paving direction (13), in particular in dependence on the determined chain sag.

5. Method according to one of the preceding claims, **characterized in that** a plurality of scraper conveyors (16) assigned to the supply container (14), in particular their upper strand (31) and/or lower strand (32), are tensioned independently of one another, preferably to different degrees, by a respective tensioning device.

6. Method according to Claim 5, **characterized in that** the upper strand (31) and the lower strand (32) are uniformly tensioned by the at least one tensioning device in a permanent manner, preferably only upon reversing of the scraper conveyor (16).

7. Method according to one of the preceding claims, **characterized in that** the at least one scraper conveyor (16) is tensioned, in addition to the tensioning device, by further resilient, in particular mechanical or hydraulic, spring elements.

8. Road-building machine, in particular road paver (10) or loader, having a supply container (14) which is arranged at the front end of the road-building machine as viewed in the paving direction (13) and intended for receiving road-building material, and having at least one scraper conveyor (16) for conveying the road-building material from the supply container (14) to a rear end of the road-building machine, **characterized in that** a lower strand (32) of the scraper conveyor (16) is assigned at least one sensor for detecting a chain sag, and the at least one scraper conveyor (16) has a tensioning device for automatically tensioning the conveyor chains (29), and a control device by means of which the conveyor chains (29) can be tensioned in dependence on an operation of the road paver (10) or of the loader, and the conveyor chains (29) of the scraper conveyor (16) are assigned at least one sensor for detecting and indicating a wear limit.

9. Road-building machine according to Claim 8, **characterized in that** a lower strand (32) of the scraper conveyor (16) is assigned at least one electrical, electromagnetic, optical or mechanical sensor for detecting the chain sag.

10. Road-building machine according to either of Claims 8 and 9, **characterized in that** the conveyor chains (29) of the scraper conveyor (16) are assigned at least one electrical, electromagnetic, optical or mechanical sensor for detecting and indicating a wear limit.

11. Road-building machine according to one of Claims 8 to 10, **characterized in that** the supporting means, in particular plates (33), of the scraper conveyor (16) are assigned at least one, in particular electrical, electromagnetic, optical or mechanical, wear indicator for detecting and/or indicating a wear.

12. Road-building machine according to one of Claims 8 to 11, **characterized in that** chain wheels (34) for the driven deflection of the conveyor chains (29) are assigned to the rear end (28) of the scraper conveyor (16) as viewed in the paving direction (13), and rollers (37) for deflecting the conveyor chains (29) are assigned to the front end (27) of the scraper conveyor (16) as viewed in the paving direction (13), wherein the tensioning device and preferably mechanical or hydraulic spring elements are assigned to the front end (27) and/or to the rear end (28) of the scraper conveyor (16).

13. Road-building machine according to one of Claims 8 to 12, **characterized in that** the supply container (14) is assigned a plurality of scraper conveyors (16) which each have sensors for detecting a chain sag and/or a wear, wherein the scraper conveyors (16) can be tensioned independently of one another by a respective tensioning device.

## Revendications

1. Procédé pour faire fonctionner un engin pour travaux routiers, notamment un finisseur (10) ou un chargeur, du matériau de construction routière étant transporté par au moins un convoyeur à raclettes (16) depuis un réservoir (14) destiné à recevoir du matériau de construction routière, disposé à l'extrémité avant de l'engin pour travaux routiers en regardant dans le sens de la fabrication (13), vers une extrémité arrière de l'engin pour travaux routiers, **caractérisé en ce qu'**une flèche de chaîne des chaînes de convoyage (29) du convoyeur à raclettes (16) est déterminée par au moins un capteur et les chaînes de convoyage (29) du convoyeur à raclettes (16) sont tendues automatiquement par un dispositif de tension conformément à la flèche de chaîne déterminée, les chaînes de convoyage (29) étant tendues par un dispositif de commande en fonction d'un fonctionnement du finisseur (10) ou du chargeur et une limite d'usure des chaînes de convoyage (29) du convoyeur à raclettes (16) étant respectivement détectée par au moins un capteur.

2. Procédé selon la revendication 1, **caractérisé en ce qu'**une flèche de chaîne du brin inférieur (32) du convoyeur à raclettes (16) est déterminée par au moins un capteur et les chaînes de convoyage (29) du convoyeur à raclettes (16) sont tendues automatiquement conformément à la flèche de chaîne déterminée.

3. Procédé selon la revendication 1 ou 2, **caractérisé en ce qu'**une limite d'usure des chaînes de convoyage (29) du convoyeur à raclettes (16) et/ou une usure des moyens porteurs, notamment de tôles (33), du convoyeur à raclettes (16) sont respectivement détectées et/ou affichées par au moins un capteur ou un indicateur d'usure.

4. Procédé selon l'une des revendications précédentes, **caractérisé en ce que** pour la tension du convoyeur à raclettes (16), des galets (37) destinés au renvoi des chaînes de convoyage (29), qui sont associés à l'extrémité avant (27) du convoyeur à raclettes (16) vu dans le sens de la fabrication (13), et/ou des roues à chaîne (34) entraînées servant au renvoi entraîné des chaînes de convoyage (29), qui sont associées à l'extrémité arrière (28) du convoyeur à raclettes (16) vu dans le sens de la fabrication (13), sont décalés automatiquement dans le et/ou à l'inverse du sens de la fabrication (13), notamment en fonction de la flèche de chaîne déterminée.

5. Procédé selon l'une des revendications précédentes, **caractérisé en ce que** plusieurs convoyeurs à raclettes (16) associés au réservoir (14), notamment leur brin supérieur (31) et/ou brin inférieur (32) sont tendus respectivement par un dispositif de tension indépendamment les uns des autres, de préférence avec des forces différentes.

6. Procédé selon la revendication 5, **caractérisé en ce que** le brin supérieur (31) et le brin inférieur (32) sont tendus de manière homogène par l'au moins un dispositif de tension continuellement, de préférence seulement en cas d'inversion de sens du convoyeur à raclettes (16).

7. Procédé selon l'une des revendications précédentes, **caractérisé en ce que** l'au moins un convoyeur à raclettes (16), en plus du dispositif de tension, est tendu par des éléments ressorts à effet ressort supplémentaires, notamment mécaniques ou hydrauliques.

8. Engin pour travaux routiers, notamment finisseur (10) ou chargeur, comprenant un réservoir (14) destiné à recevoir du matériau de construction routière, disposé à l'extrémité avant de l'engin pour travaux routiers en regardant dans le sens de la fabrication (13), et comprenant au moins un convoyeur à raclettes (16) destiné à transporter le matériau de construction routière depuis le réservoir (14) vers une extrémité arrière de l'engin pour travaux routiers, **caractérisé en ce qu'**au moins un capteur est associé à un brin inférieur (32) du convoyeur à raclettes (16) en vue de détecter une flèche de chaîne et l'au moins un convoyeur à raclettes (16) possède un dispositif de tension destiné à tendre automatiquement les chaînes de convoyage (29) ainsi qu'un dispositif de commande par lequel les chaînes de convoyage (29) peuvent être tendues en fonction d'un fonctionnement du finisseur (10) ou du chargeur et au moins un capteur étant associé aux chaînes de convoyage (29) du convoyeur à raclettes (16) en vue de détecter et d'afficher une limite d'usure.

9. Engin pour travaux routiers selon la revendication 8, **caractérisé en ce qu'**au moins un capteur électrique, électromagnétique, optique ou mécanique est associé à un brin inférieur (32) du convoyeur à raclettes (16) en vue de détecter la flèche de chaîne.

10. Engin pour travaux routiers selon la revendication 8 ou 9, **caractérisé en ce qu'**au moins un capteur électrique, électromagnétique, optique ou mécanique est associé aux chaînes de convoyage (29) du convoyeur à raclettes (16) en vue de détecter et d'afficher une limite d'usure.

11. Engin pour travaux routiers selon l'une des revendications 8 à 10, **caractérisé en ce qu'**au moins un indicateur d'usure, notamment électrique, électromagnétique, optique ou mécanique est associé aux moyens porteurs, notamment aux tôles (33), du convoyeur à raclettes (16) en vue de détecter et/ou d'afficher une usure.

12. Engin pour travaux routiers selon l'une des revendications 8 à 11, **caractérisé en ce que** des roues à chaîne (34) servant au renvoi entraîné des chaînes de convoyage (29) sont associées à l'extrémité arrière (28) du convoyeur à raclettes (16) vu dans le sens de la fabrication (13), et des galets (37) destinés au renvoi des chaînes de convoyage (29) sont associés à l'extrémité avant (27) du convoyeur à raclettes (16) vu dans le sens de la fabrication (13), le dispositif de tension et de préférence des éléments ressorts mécaniques ou hydrauliques étant associés à l'extrémité avant (27) et/ou à l'extrémité arrière (28) du convoyeur à raclettes (16) .

13. Engin pour travaux routiers selon l'une des revendications 8 à 12, **caractérisé en ce que** plusieurs convoyeurs à raclettes (16) associés au réservoir (14), lesquels possèdent respectivement des capteurs destinés à détecter une flèche de chaîne et/ou une usure, les convoyeurs à raclettes (16) pouvant être tendus indépendamment les uns des autres respectivement par un dispositif de tension.
